# EUROPÄISCHE PATENTSCHRIFT

(11) **EP 3 714 122 B1**
(45) Veröffentlichungstag und Bekanntmachung des Hinweises auf die Patenterteilung: **22.11.2023**
(21) Anmeldenummer: 18796824.3
(22) Anmeldetag: 22.10.2018
(51) Int. Cl.: E05D 15/40, E05F 1/10, E05D 7/02, E05D 5/02

(54) **MÖBELBESCHLAG**
FURNITURE FITTING
FERRURE DE MEUBLE

(30) Priorität: 24.11.2017 AT 509802017
(43) Veröffentlichungstag der Anmeldung: 30.09.2020
(73) Patentinhaber: Julius Blum GmbH, 6973 Höchst (AT)
(72) Erfinder: HOLZAPFEL, Andreas, 6900 Bregenz (AT); SCHLUGE, Philip, 6850 Dornbirn (AT)
(74) Vertreter: Torggler & Hofmann Patentanwälte - Innsbruck
(86) Internationale Anmeldenummer: PCT/AT2018/060254
(87) Internationale Veröffentlichungsnummer: WO 2019/100091

(56) Entgegenhaltungen:
- WO-A1-2013/029070
- WO-A1-2014/138760
- WO-A2-2008/076089
- AT-B- 352 329
- DE-A1-102007 049 143
- JP-A- H10 179 297

## Beschreibung

Die vorliegende Erfindung bezieht sich auf einen Möbelbeschlag mit wenigstens einer drehbar gelagerten Schraube zur Befestigung des Möbelbeschlages an einem Möbelteil.

Im Weiteren betrifft die Erfindung ein Verfahren zur Befestigung eines derartigen Möbelbeschlages an einem Möbelteil.

In der WO 2013/029070 A1 und in der WO 2014/138760 A1 sind Möbelbeschläge gezeigt, welche durch eine Schraube wahlweise an gegenüberliegenden Seitenwänden eines Möbelkorpus zu befestigen sind. Hierfür sind an beiden Endbereichen der Schraube Werkzeugaufnahmen vorgesehen, sodass die Schraube durch Drehung der ersten Werkzeugaufnahme in die erste Seitenwand oder alternativ durch Drehung der zweiten Werkzeugaufnahme in die zweite Seitenwand eindrehbar ist. Zur Montage des Möbelbeschlages ist allerdings ein relativ hoher Kraftaufwand erforderlich, außerdem fällt die Dicke des Möbelbeschlages aufgrund der zu beiden Seiten der Schraube angeordneten Werkzeugaufnahmen relativ hoch aus.

Aus dem AT 352 329 B und aus dem JPH10179297 A sind Möbelbeschläge bekannt, mit einer Schraube zur Befestigung des Möbelbeschlages an einem Möbelteil, und mit einem mit der Schraube bewegungsgekoppelten Antriebselement umfassend eine Werkzeugaufnahme, wobei die Schraube durch Drehung der Werkzeugaufnahme mittels eines Werkzeuges antreibbar ist

Aufgabe der vorliegenden Erfindung ist es, einen Möbelbeschlag der eingangs erwähnten Gattung unter Vermeidung der oben diskutierten Nachteile anzugeben.

Dies wird erfindungsgemäß durch die Merkmale des Patentanspruchs 1 gelöst. Weitere vorteilhafte Ausführungen der Erfindung sind in den abhängigen Ansprüchen definiert. Gemäß der Erfindung ist vorgesehen, dass der Möbelbeschlag zumindest ein von der Schraube gesondertes und mit der Schraube bewegungsgekoppeltes Antriebselement mit einer Werkzeugaufnahme aufweist, wobei die zumindest eine Schraube durch Drehung der Werkzeugaufnahme mittels eines Werkzeuges antreibbar ist.

Durch die vorgeschlagene Konstruktion ergeben sich mehrere Vorteile, nämlich:
- durch ein seitlich neben der Schraube angeordnetes Antriebselement kann die Bauweise des Möbelbeschlages flacher ausgeführt werden, da auf eine Anordnung der Werkzeugaufnahmen auf beiden Seiten der Schraube verzichtet werden kann,
- das Antriebselement kann mit der Schraube über ein mechanisches Getriebe (beispielsweise ein Zahnradgetriebe oder ein Schneckengetriebe) bewegungsgekoppelt sein, wodurch sich die Möglichkeit einer Veränderung des Übersetzungsverhältnisses ergibt. Beispielsweise kann das Antriebselement durch einen Akkuschrauber mit relativ hoher Drehzahl angetrieben werden, wobei die Schraube dann mit entsprechend reduzierter Drehzahl aber mit hohem Drehmoment in das Möbelteil eindrehbar ist,
- durch die vorgeschlagene Konstruktion ist es zudem auch möglich, dass zwei oder mehrere Schrauben des Möbelbeschlages mit dem Antriebselement bewegungsgekoppelt sind, sodass die zwei oder mehreren Schrauben durch Drehung der Werkzeugaufnahme mittels des Werkzeuges antreibbar sind,
- durch die vorgeschlagene Erfindung ist es schließlich auch möglich, dass die zumindest eine Schraube des Möbelbeschlages wahlweise an zwei gegenüberliegenden Seiten eines Möbelkorpus montierbar ist.

Erfindungsgemäß weist der Möbelbeschlag ein Gehäuse mit einer ersten Gehäusewand und eine von der ersten Gehäusewand beabstandete zweite Gehäusewand auf, wobei zwischen der ersten und zweiten Gehäusewand wenigstens ein Lagerteil zur Aufnahme der Schraube und des Antriebselementes angeordnet ist. Der Lagerteil weist zumindest eine erste Führung zur Lagerung der Schraube und zumindest eine zweite Führung zur Lagerung des Antriebselementes auf.

Gemäß einem Ausführungsbeispiel kann vorgesehen sein, dass das zumindest eine Antriebselement um eine erste Drehachse und die zumindest eine Schraube um eine zweite Drehachse drehbar gelagert sind, wobei die erste Drehachse und die zweite Drehachse seitlich versetzt zueinander angeordnet sind. Auf diese Weise ist der Möbelbeschlag mit einer flachen Bauweise ausführbar.

Gemäß einem weiteren Ausführungsbeispiel kann vorgesehen sein, dass das Antriebselement und die zumindest eine Schraube über zusammenwirkende Verzahnungen miteinander bewegungsgekoppelt sind. Eine erste Verzahnung kann beispielsweise an einer Umfangsfläche des Antriebselementes angeordnet oder ausgebildet sein. Eine zweite Verzahnung kann hingegen an einem Kopfteil der Schraube angeordnet oder ausgebildet sein, wobei die erste und zweite Verzahnung, insbesondere auch direkt, miteinander in Verbindung stehen.

Gemäß einem weiteren Ausführungsbeispiel kann vorgesehen sein, dass das Antriebselement und die Schraube nicht nur rotatorisch miteinander bewegungsgekoppelt sind, sondern auch in einer in Längsrichtung der Schraube verlaufenden, axialen Richtung. Dies bietet beispielsweise die Möglichkeit, dass das Antriebselement zusammen mit der Schraube in Längsrichtung der Schraube bewegbar ist, sodass die Schraube entweder in eine erste Seitenwand oder alternativ in eine, der ersten Seitenwand gegenüberliegende, zweite Seitenwand des Möbelkorpus eindrehbar ist. Eine solche axiale Bewegungskopplung zwischen dem Antriebselement und der Schraube kann beispielsweise derart erfolgen, dass die Schraube eine erste Anschlagfläche und zumindest eine zweite Anschlagfläche aufweist, welche in einer axialen Richtung der Schraube voneinander beabstandet sind und wobei eine Verzahnung des Antriebselementes zwischen der ersten und zweiten Anschlagfläche der Schraube aufgenommen ist.

Das Verfahren zur Befestigung eines Möbelbeschlages an einem Möbelteil ist durch folgende Schritte gekennzeichnet:
- ein Werkzeug wird in die Werkzeugaufnahme des Antriebselementes eingeführt,
- das Antriebselement wird durch Drehung der Werkzeugaufnahme mittels des Werkzeuges rotiert,
- die zumindest eine Schraube wird durch die Bewegungskopplung zwischen dem Antriebselement und der Schraube angetrieben, und
- der Möbelbeschlag wird am Möbelteil über die zumindest eine Schraube befestigt.

Der Möbelbeschlag kann beispielsweise als Stellantrieb für Möbelklappen ausgebildet sein, welcher zumindest einen schwenkbar gelagerten Stellarm zum Antreiben eines relativ zu einem Möbelkorpus bewegbar gelagerten Möbelteiles aufweist. Der Möbelbeschlag kann zur Kraftbeaufschlagung des Stellarmes eine Federvorrichtung und/oder einen elektrischen Antrieb zum Antreiben des Stellarmes umfassen.

Alternativ kann der Möbelbeschlag auch als Möbelscharnier, als Schubladenausziehführung oder als Lagervorrichtung zur Lagerung zumindest eines Funktionsteiles (beispielsweise eine Dämpfvorrichtung zum Abbremsen einer Bewegung des bewegbaren Möbelteiles, eine Einziehvorrichtung zum Einziehen des Möbelteiles in eine geschlossene Endlage relativ zu einem Möbelkorpus, eine Ausstoßvorrichtung (insbesondere eine Touch-Latch-Vorrichtung) zum Ausstoßen des bewegbaren Möbelteiles aus einer geschlossenen Endlage in eine Offenstellung) ausgebildet sein.

Weitere Einzelheiten und Vorteile der vorliegenden Erfindung werden anhand der nachfolgenden Figurenbeschreibung erläutert. Dabei zeigt bzw. zeigen:
- Fig. 1a, 1b: perspektivische Ansichten eines Möbels mit einem relativ zu einem Möbelkorpus bewegbar gelagerten Möbelteil sowie das Möbel mit ausgeblendetem Möbelteil,
- Fig. 2: ein Ausführungsbeispiel eines Möbelbeschlages in einer perspektivischen Ansicht,
- Fig. 3a-3c: eine Gehäusewand des Möbelbeschlages in einer perspektivischen Ansicht, in einer Draufsicht sowie in einer perspektivischen Detailansicht,
- Fig. 4a, 4b: perspektivische Ansichten des Lagerteiles, der Schrauben und des Antriebselementes,
- Fig. 5a-5c: Querschnitte des Möbelbeschlages mit der Haltevorrichtung zum Halten der Schrauben in einer vorgegebenen Position sowie in zwei verschiedenen Montagestellungen,
- Fig. 6a, 6b: weitere Ausführungsbeispiele der Schrauben und des Antriebselementes in perspektivischen Ansichten.

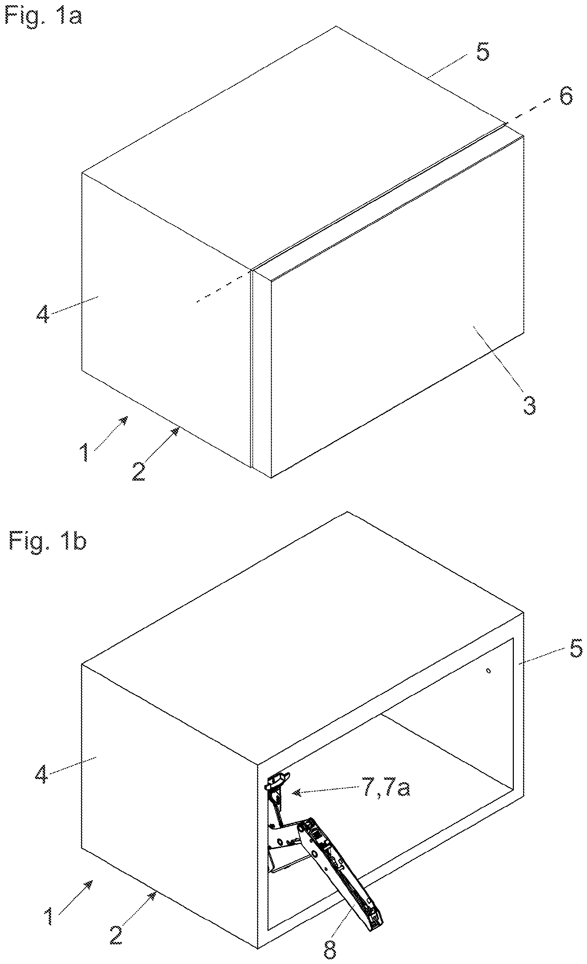

Fig. 1a zeigt ein schrankförmiges Möbel 1, welches beispielsweise als Küchenoberschrank ausgebildet sein kann. Das Möbel 1 weist einen Möbelkorpus 2 mit Seitenwänden 4, 5 sowie ein bewegbar gelagertes Möbelteil 3 auf, welches relativ zum Möbelkorpus 2 um eine in Montagelage horizontal verlaufende Achse 6 schwenkbar gelagert ist. In Fig. 1a befindet sich das Möbelteil 3 in einer das Schrankfach des Möbelkorpus 2 abdeckenden, vertikalen Schließstellung und kann durch einen Möbelbeschlag 7 zwischen der Schließstellung und einer relativ zum Möbelkorpus 2 angehobenen Offenstellung bewegt werden.

Fig. 1b zeigt das Möbel 1 mit ausgeblendetem Möbelteil 3. An der ersten Seitenwand 4 ist ein Möbelbeschlag 7 zum Bewegen des Möbelteiles 3 befestigt, wobei der Möbelbeschlag 7 im gezeigten Ausführungsbeispiel als Stellantrieb 7a mit wenigstens einem schwenkbar gelagerten und mit dem Möbelteil 3 zu verbindenden Stellarm 8 ausgebildet ist.

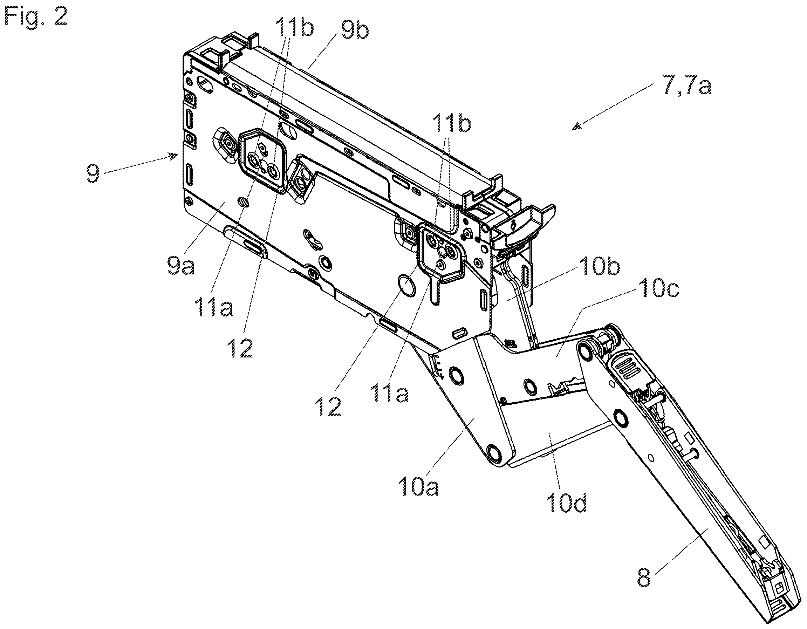

Fig. 2 zeigt den als Stellantrieb 7a ausgebildeten Möbelbeschlag 7 in einer perspektivischen Ansicht. Der Möbelbeschlag 7 umfasst ein Gehäuse 9 mit zwei voneinander beabstandeten Gehäusewänden 9a, 9b, wobei der Stellarm 8 über Hebel 10a, 10b, 10c, 10d relativ zum Gehäuse 9 um eine in Montagelage horizontal verlaufende Achse schwenkbar gelagert ist. Zur Kraftbeaufschlagung des Stellarmes 8 kann der Möbelbeschlag 7 eine (nicht gezeigte) Federvorrichtung und/oder einen elektrischen Antrieb umfassen.

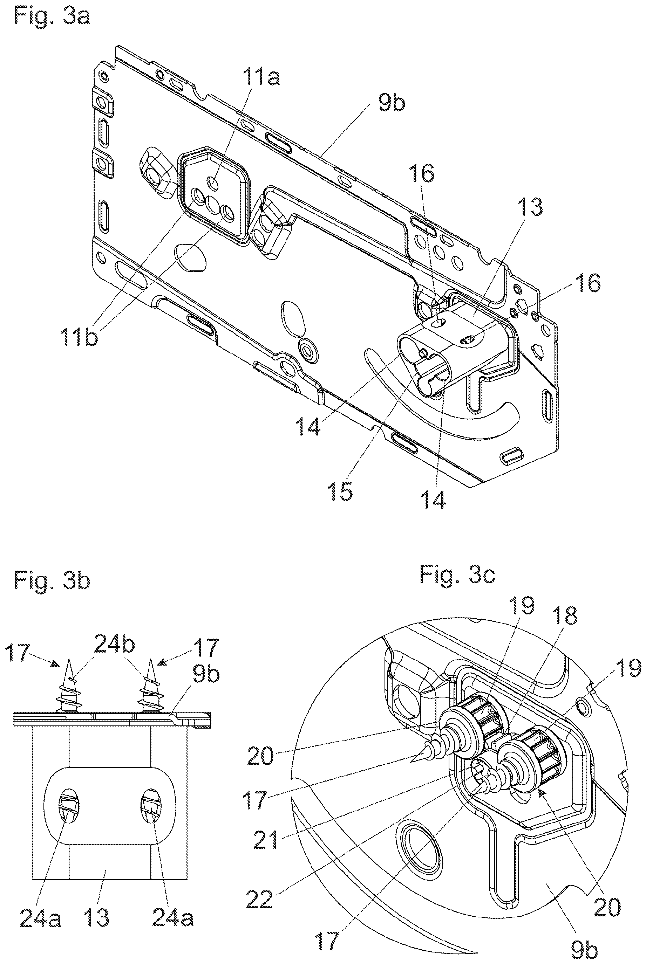

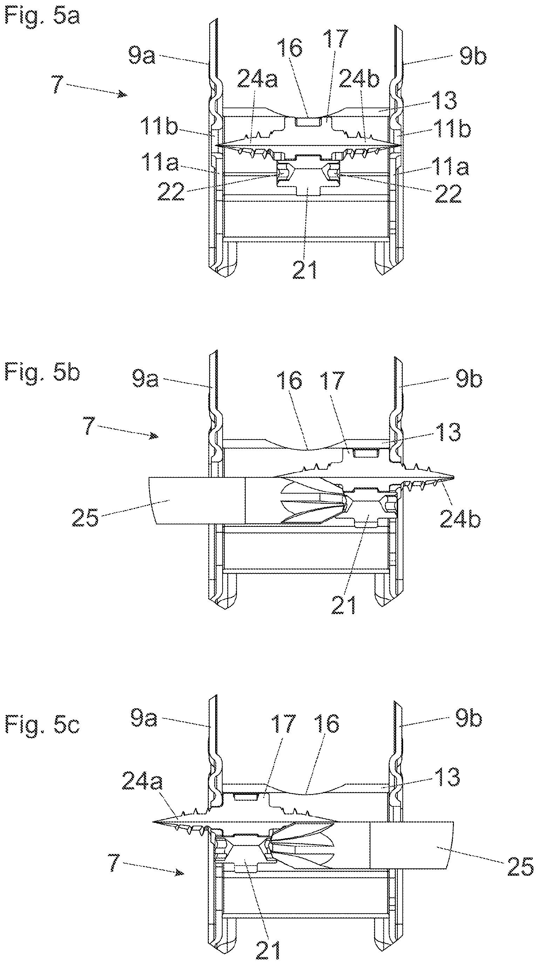

Die Gehäusewände 9a, 9b können spiegelsymmetrisch zueinander ausgebildet sein, sodass die hier ausgeführten Erklärungen jeweils für beide Gehäusewände 9a, 9b Gültigkeit haben. Das Gehäuse 9 ist entweder über die erste Gehäusewand 9a an der ersten Seitenwand 4 (Fig. 1a, 1b) oder alternativ über die zweite Gehäusewand 9b an der zweiten Seitenwand 5 des Möbelkorpus 2 zu montieren. Die Gehäusewände 9a, 9b weisen jeweils erste Löcher 11a zur Betätigung eines Antriebselementes 21 (Fig. 3b) mittels eines Werkzeuges 25 (Fig. 5b, 5c) und zweite Löcher 11b zum Durchtritt von im Gehäuse 9 angeordneten Schrauben 17 auf. Die Löcher 11a, 11b sind jeweils innerhalb einer, vorzugsweise umlaufend geschlossenen, Versteifungswulst 12 in Form einer Prägung angeordnet, wodurch das Risiko einer Verformung der Gehäusewände 9a, 9b beim Anschrauben an den Seitenwänden 4, 5 verringert wird.

Fig. 3a zeigt die zweite Gehäusewand 9b des Möbelbeschlages 7 in einer perspektivischen Ansicht, wobei die Gehäusewand 9b zumindest ein erstes Loch 11a zum Durchtritt eines Werkzeuges 25 und zumindest ein zweites Loch 11b zum Durchtritt einer Schraube 17 aufweist. Zwischen der ersten und zweiten Gehäusewand 9a, 9b ist wenigstens ein Lagerteil 13 zur Aufnahme der Schraube 17 und des Antriebselementes 21 angeordnet. Dabei kann vorgesehen sein, dass der Lagerteil 13 in Montagelage an beiden Gehäusewänden 9a, 9b anliegt und mit diesen fest verbunden (beispielsweise verschweißt) ist. Der Lagerteil 13 weist zumindest eine erste Führung 14 zur Lagerung der Schraube 17 und zumindest eine zweite Führung 15 zur Lagerung des Antriebselementes 21 auf. Die zumindest eine Schraube 17 und das zumindest eine Antriebselement 21 sind relativ zu den Führungen 14, 15 des Lagerteiles 13 durch eine Haltevorrichtung 16 an einer vorgegebenen Position vorfixiert, wobei die Haltevorrichtung 16 durch Kraftausübung auf das Antriebselement 21 mittels des Werkzeuges 25 lösbar ist und anschließend die Schraube 17 zusammen mit dem Antriebselement 21 relativ zu den Führungen 14, 15 des Lagerteiles 13 in einer quer, vorzugsweise im Wesentlichen rechtwinklig, zu den Gehäusewänden 9a, 9b verlaufenden Richtung verschiebbar gelagert ist. Mit anderen Worten sind die Schraube 17 und das Antriebselement 21 im Lagerteil 13 in einer zwischen den Gehäusewänden 9a, 9b angeordneten Mittelstellung durch die Haltevorrichtung 16 vorfixiert und sind durch Kraftausübung auf das Antriebselement 21 (nämlich durch Einführen des Werkzeuges in das erste Loch 11a mit anschließender Druckausübung auf das Antriebselement 21) entweder in Richtung der ersten Gehäusewand 9a oder alternativ in Richtung der zweiten Gehäusewand 9b bewegbar, sodass entweder die erste Gehäusewand 9a mit der ersten Seitenwand 4 des Möbelkorpus 2 oder alternativ die zweite Gehäusewand 9b mit der zweiten Seitenwand 5 des Möbelkorpus 2 durch die Schraube 17 befestigbar ist.

Fig. 3b zeigt eine Draufsicht auf die zweite Gehäusewand 9b, wobei die aus dem Lagerteil 13 herausragenden Gewindeabschnitte 24b der Schrauben 17 in die zweite Seitenwand 5 des Möbelkorpus 2 eindrehbar sind. Überdies können weitere Gewindeabschnitte 24a vorgesehen sein, welche sich hier in einer inaktiven Stellung befinden und welche zur Befestigung der ersten Gehäusewand 9a mit der ersten Seitenwand 4 des Möbelkorpus 2 vorgesehen sind. Die Gewindeabschnitte 24a können jeweils mit den aus dem Lagerteil 13 herausragenden Schrauben 17 zusammen einstückig oder auch als voneinander gesonderte Bauteile ausgeführt sein. Gemäß einem Ausführungsbeispiel kann vorgesehen sein, dass zwei oder mehrere Schrauben 17 des Möbelbeschlages 7 durch Drehung einer Werkzeugaufnahme 22 eines einzigen Antriebselementes 21 antreibbar sind.

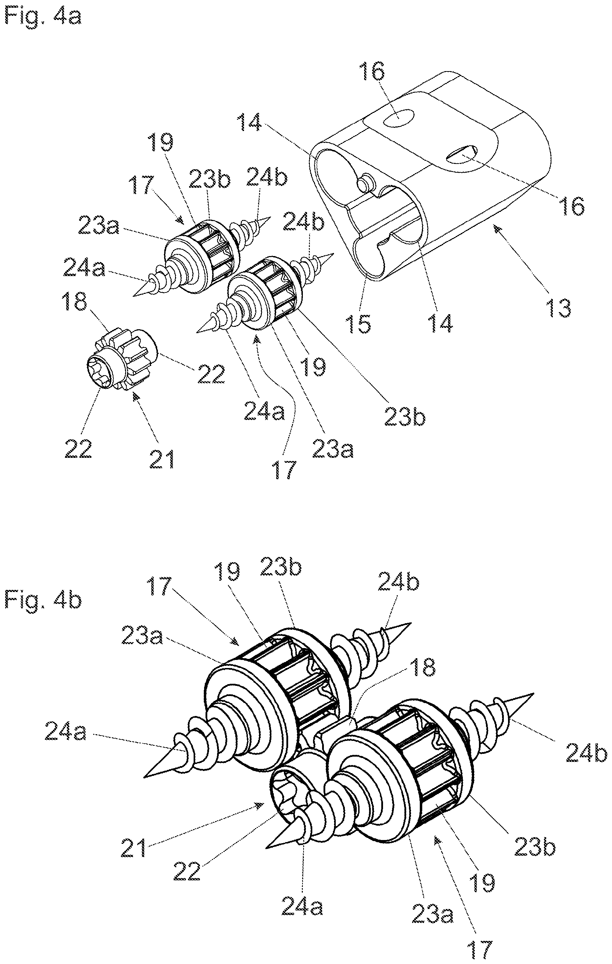

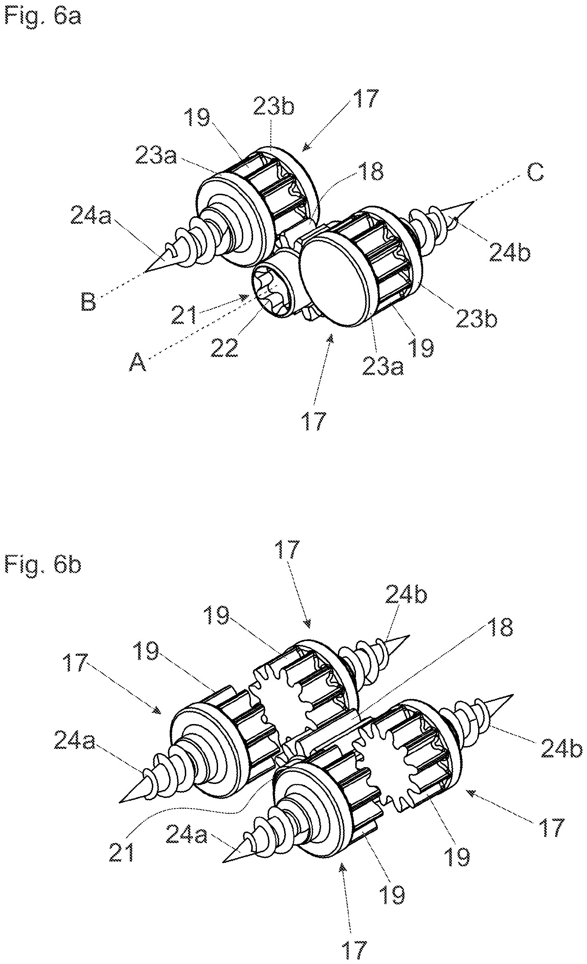

Fig. 3c zeigt eine Detailansicht der zweiten Gehäusewand 9b, wobei das drehbar gelagerte Antriebselement 21 mit der Werkzeugaufnahme 22 und die dadurch antreibbaren Schrauben 17 gezeigt sind. Die Drehachse A (Fig. 6a) des Antriebselementes 21 ist relativ zu den Drehachsen (B, C) der Schrauben 17 seitlich versetzt angeordnet. Das Antriebselement 21 ist mit den Schrauben 17 über Verzahnungen 18, 19 bewegungsgekoppelt, wobei eine erste Verzahnung 18 an einer Umfangsfläche des Antriebselementes 21 angeordnet oder ausgebildet ist. Die Schrauben 17 können hingegen einen Gewindeabschnitt 24a, 24b (Fig. 4a) und einen mit dem Gewindeabschnitt 24a, 24b verbundenen Kopfteil 20 aufweisen, wobei eine zweite Verzahnung 19 am Kopfteil 20 der Schraube 17 angeordnet oder ausgebildet ist. Damit die Schrauben 17 bei einer Verdrehung der Werkzeugaufnahme 22 in die erste Gehäusewand 9a eindrehbar sind, sind die in Fig. 3c mit dem Bezugszeichen "17" gekennzeichneten (inaktiven) Schrauben mit einem entgegengesetzten Schraubensinn zu versehen. Selbstverständlich sind aber auch Ausführungen möglich, bei denen die Schrauben 17 einen gleichen Schraubensinn aufweisen.

Fig. 4a zeigt den Lagerteil 13 mit den ersten Führungen 14 zur Lagerung der Schrauben 17 und mit der zweiten Führung 15 zur Lagerung des Antriebselementes 21. Die (hier im Querschnitt im Wesentlichen kleeblattförmig ausgebildeten) Führungen 14, 15 des Lagerteiles 13 verlaufen im Wesentlichen parallel zueinander sowie in einer zu den Gehäusewänden 9a, 9b im Wesentlichen senkrecht verlaufenden Richtung. Das Antriebselement 21 weist zwei gegenüberliegende Werkzeugaufnahmen 22 auf, sodass das Antriebselement 21 wahlweise von der linken Seite oder alternativ auch von der rechten Seite her mittels eines Werkzeuges 25 zu betätigen ist. Die beiden Werkzeugaufnahmen 22 des Antriebselementes 21 können dabei identisch ausgebildet sein und beispielsweise mit einer Schlitzform und/oder mit einer Mehrkantform zur Aufnahme von Werkzeugen 25 (insbesondere eines Torx-Antriebes) versehen sein. Die (an tibetanische Gebetsmühlen erinnernden) Schrauben 17 weisen im gezeigten Ausführungsbeispiel jeweils zwei in entgegengesetzte Richtungen weisende Gewindeabschnitte 24a, 24b auf, welche einstückig miteinander verbunden sind.

Zur Bewegungskopplung zwischen dem Antriebselement 21 und der zumindest einen Schraube 17 in einer axialen Richtung kann die Schraube 17 eine erste Anschlagfläche 23a und zumindest eine zweite Anschlagfläche 23b aufweisen, welche in einer axialen Richtung der Schraube 17 voneinander beabstandet sind und wobei die Verzahnung 18 des Antriebselementes 21 zwischen der ersten und zweiten Anschlagfläche 23a, 23b der Schraube 17 aufgenommen ist. Diese Maßnahme geht aus Fig. 4b gut erkennbar hervor. Wird also beispielsweise das Antriebselement 21 durch Druckausübung mittels des Werkzeuges 25 in eine erste axiale Richtung gedrückt, so werden die Schrauben 17 durch das Anliegen der Verzahnung 18 an der ersten Anschlagfläche 23a der Schraube 17 in die erste axiale Richtung mitbewegt. Wird hingegen auf das Antriebselement 21 mittels des Werkzeuges 25 in eine der ersten Richtung entgegengesetzte, zweite Richtung Kraft ausgeübt, so werden die Schrauben 17 durch das Anliegen der Verzahnung 18 an der zweiten Anschlagfläche 23b der Schrauben 17 in eine der ersten axialen Richtung entgegengesetzte, zweite axiale Richtung mitbewegt.

Fig. 5a zeigt den Möbelbeschlag 7 in einem Querschnitt, wobei die Schrauben 17 mit den beiden Gewindeabschnitten 24a, 24b vollständig innerhalb der beiden Gehäusewände 9a, 9b des Möbelbeschlages 7 aufgenommen sind und durch eine Haltevorrichtung 16 (vorzugsweise in einer mittleren Stellung in Bezug auf die Gehäusewände 9a, 9b) in einer vorgegebenen Position gehalten werden. Die Haltevorrichtung 16 zum Halten der Schraube 17 in der vorgegebenen Position kann beispielsweise durch eine reibschlüssige Verbindung zwischen dem Lagerteil 13 und der Schraube 17 erfolgen. Im gezeigten Ausführungsbeispiel wird die Haltevorrichtung 16 durch zumindest einen am Lagerteil 13 angeordneten Vorsprung gebildet, welcher mit der Schraube 17 reibschlüssig in Verbindung steht. Alternativ kann die Haltevorrichtung 16 auch durch zumindest eine Sollbruchstelle gebildet sein, welche durch Kraftausübung auf die Schraube 17 in einer axialen Richtung lösbar ist.

Fig. 5b zeigt jene Montagesituation, in welcher die rechte Gehäusewand 9b über die Schraube 17 an der rechten Seitenwand 5 des Möbelkorpus 2 befestigt ist. Ausgehend von Fig. 5a wird ein Werkzeug 25 in das erste Loch 11a der linken Gehäusewand 9a eingeführt, woraufhin die Haltevorrichtung 16 durch Druckausübung auf die linke Werkzeugaufnahme 22 des Antriebselementes 21 lösbar ist und anschließend die Schraube 17 in Richtung der rechten Gehäusewand 9b bewegbar ist. Durch Drehung der linken Werkzeugaufnahme 22 mittels des Werkzeuges 25 durchsetzt der Gewindeabschnitt 24b der Schraube 17 das zweite Loch 11b der rechten Gehäusewand 9b und ist sodann in die rechte Seitenwand 5 des Möbelkorpus 2 eindrehbar.

Fig. 5c zeigt hingegen jene Montagesituation, in welcher die linke Gehäusewand 9a über die Schraube 17 an der linken Seitenwand 4 des Möbelkorpus 2 befestigt ist. Ausgehend von Fig. 5a wird ein Werkzeug 25 in das erste Loch 11b der rechten Gehäusewand 9b eingeführt, woraufhin die Haltevorrichtung 16 durch Druckausübung auf die rechte Werkzeugaufnahme 22 des Antriebselementes 21 lösbar ist und anschließend die Schraube 17 in Richtung der linken Gehäusewand 9a bewegbar ist. Durch Drehung der rechten Werkzeugaufnahme 22 mittels des Werkzeuges 25 durchsetzt der Gewindeabschnitt 24a der Schraube 17 das zweite Loch 11b der linken Gehäusewand 9a und ist sodann in die linke Seitenwand 4 des Möbelkorpus 2 eindrehbar.

Fig. 6a zeigt ein weiteres Ausführungsbeispiel von Schrauben 17, welche jeweils nur einen einzigen Gewindeabschnitt 24a, 24b aufweisen. Der Gewindeabschnitt 24a ist zum Eindrehen der Schraube 17 in die linke Seitenwand 4 des Möbelkorpus 2 ausgebildet, während der Gewindeabschnitt 24b der anderen Schraube 17 in die rechte Seitenwand 5 des Möbelkorpus einzudrehen ist. Die an den Gewindeabschnitten 24a, 24b angeordneten Gewinde sind dabei mit einem unterschiedlichen Schraubensinn (einmal Rechtsgewinde, einmal Linksgewinde) auszuführen. Die Drehachse (A) des Antriebselementes 21 ist relativ zu zumindest einer Drehachse (B) der Schraube 17, vorzugsweise zu beiden Drehachsen (B, C) der Schrauben 17, seitlich versetzt angeordnet.

Fig. 6b zeigt die Möglichkeit, dass mit einem einzigen Antriebselement 21 auch mehrere Schrauben 17 (im vorliegenden Fall vier Schrauben 17) antreibbar sind. Die Schrauben 17 weisen Verzahnungen 19 auf, welche allesamt mit einer verlängerten Verzahnung 18 des Antriebselementes 21 in Eingriff stehen. Durch Drehung des Antriebselementes 21 mittels eines Werkzeuges 25 sind die beiden Gewindeabschnitte 24a in die linke Seitenwand 4 des Möbelkorpus 2 eindrehbar. Bei Verwendung der beiden anderen Schrauben 17 zur Montage der rechten Gehäusewand 9b sind die Gewindeabschnitte 24b der Schrauben 17 in die rechte Seitenwand 5 des Möbelkorpus 2 einschraubbar.

## Patentansprüche

1. Möbelbeschlag (7) mit wenigstens einer drehbar gelagerten Schraube (17) zur Befestigung des Möbelbeschlages (7) an einem Möbelteil (4, 5), wobei der Möbelbeschlag (7) zumindest ein von der Schraube (17) gesondertes und mit der Schraube (17) bewegungsgekoppeltes Antriebselement (21) mit einer Werkzeugaufnahme (22) aufweist, wobei die zumindest eine Schraube (17) durch Drehung der Werkzeugaufnahme (22) mittels eines Werkzeuges (25) antreibbar ist, **dadurch gekennzeichnet, dass** der Möbelbeschlag (7) ein Gehäuse (9) mit einer ersten Gehäusewand (9a) und eine von der ersten Gehäusewand (9a) beabstandete zweite Gehäusewand (9b) aufweist, wobei zwischen der ersten und zweiten Gehäusewand (9a, 9b) wenigstens ein Lagerteil (13) zur Aufnahme der Schraube (17) und des Antriebselementes (21) angeordnet ist, wobei der Lagerteil (13) zumindest eine erste Führung (14) zur Lagerung der Schraube (17) und zumindest eine zweite Führung (15) zur Lagerung des Antriebselementes (21) aufweist.

2. Möbelbeschlag nach Anspruch 1, **dadurch gekennzeichnet, dass** das zumindest eine Antriebselement (21) um eine erste Drehachse (A) und die zumindest eine Schraube (17) um eine zweite Drehachse (B) drehbar gelagert sind, wobei die erste Drehachse (A) und die zweite Drehachse (B) seitlich versetzt zueinander angeordnet sind.

3. Möbelbeschlag nach Anspruch 1 oder 2, **dadurch gekennzeichnet, dass** das Antriebselement (21) und die zumindest eine Schraube (17) über zusammenwirkende Verzahnungen (18, 19) miteinander bewegungsgekoppelt sind.

4. Möbelbeschlag nach Anspruch 3, **dadurch gekennzeichnet, dass** eine erste Verzahnung (18) an einer Umfangsfläche des Antriebselementes (21) angeordnet oder ausgebildet ist.

5. Möbelbeschlag nach Anspruch 3 oder 4, **dadurch gekennzeichnet, dass** die Schraube (17) einen Gewindeabschnitt (24a, 24b) und einen mit dem Gewindeabschnitt (24a, 24b) verbundenen Kopfteil (20) aufweist, wobei eine zweite Verzahnung (19) am Kopfteil (20) der Schraube (17) angeordnet oder ausgebildet ist.

6. Möbelbeschlag nach einem der Ansprüche 3 bis 5, **dadurch gekennzeichnet, dass** die Schraube (17) eine erste Anschlagfläche (23a) und zumindest eine zweite Anschlagfläche (23b) aufweist, welche in einer axialen Richtung der Schraube (17) voneinander beabstandet sind und wobei eine Verzahnung (18) des Antriebselementes (21) zwischen der ersten und zweiten Anschlagfläche (23a, 23b) der Schraube (17) aufgenommen ist.

7. Möbelbeschlag nach einem der Ansprüche 1 bis 6, **dadurch gekennzeichnet, dass** der Möbelbeschlag (7) zumindest zwei oder mehrere Schrauben (17) aufweist, wobei durch Drehung der Werkzeugaufnahme (22) mittels eines Werkzeuges (25) die zwei oder mehreren Schrauben (17) antreibbar sind.

8. Möbelbeschlag nach Anspruch 7, **dadurch gekennzeichnet, dass** eine erste Schraube (17) und eine zweite Schraube (17) der zwei oder mehreren Schrauben (17) jeweils einen Gewindeabschnitt (24a, 24b) mit einem daran angeordneten Gewinde aufweisen, wobei das Gewinde der ersten Schraube (17) und das Gewinde der zweiten Schraube (17) einen entgegengesetzten Schraubensinn oder einen gleichen Schraubensinn aufweisen.

9. Möbelbeschlag nach einem der Ansprüche 1 bis 8, **dadurch gekennzeichnet, dass** der Lagerteil (13) sowohl an der ersten Gehäusewand (9a) als auch an der zweiten Gehäusewand (9b) anliegt.

10. Möbelbeschlag nach einem der Ansprüche 1 bis 9, **dadurch gekennzeichnet, dass** die zumindest eine Schraube (17) und das zumindest eine Antriebselement (21) relativ zu den Führungen (14, 15) des Lagerteiles (13) durch eine Haltevorrichtung (16) an einer vorgegebenen Position vorfixiert sind, wobei die Haltevorrichtung (16) durch Kraftausübung auf das Antriebselement (21) mittels des Werkzeuges (25) lösbar ist und die Schraube (17) nach erfolgtem Lösen der Haltevorrichtung (16) zusammen mit dem Antriebselement (21) relativ zu den Führungen (14, 15) des Lagerteiles (13) in einer quer, vorzugsweise im Wesentlichen rechtwinklig, zu den Gehäusewänden (9a, 9b) verlaufenden Richtung verschiebbar gelagert ist.

11. Möbelbeschlag nach Anspruch 10, **dadurch gekennzeichnet, dass** die zumindest eine Schraube (17) und das zumindest eine Antriebselement (21) ausgehend von der vorgegebenen Position in zwei entgegengesetzten Richtungen bewegbar sind, sodass die erste Gehäusewand (9a) oder alternativ die zweite Gehäusewand (9b) über die Schraube (17) an zwei unterschiedlichen Möbelteilen (4, 5) befestigbar ist.

12. Möbelbeschlag nach einem der Ansprüche 2 bis 11, **dadurch gekennzeichnet, dass** die erste Drehachse (A) des zumindest einen Antriebselementes (21) und die zweite Drehachse (B) der wenigstens einen Schraube (17) im Wesentlichen parallel zueinander verlaufen.

13. Verfahren zur Befestigung eines Möbelbeschlages (7) nach einem der Ansprüche 1 bis 12 an einem Möbelteil (4, 5), **gekennzeichnet durch** die folgenden Schritte:
- ein Werkzeug (25) wird in die Werkzeugaufnahme (22) des Antriebselementes (21) eingeführt,
- das Antriebselement (21) wird durch Drehung der Werkzeugaufnahme (22) mittels des Werkzeuges (25) rotiert,
- die zumindest eine Schraube (17) wird durch die Bewegungskopplung zwischen dem Antriebselement (21) und der Schraube (17) angetrieben, und
- der Möbelbeschlag (7) wird am Möbelteil (4, 5) über die zumindest eine Schraube (17) befestigt.

## Claims

1. A furniture fitting (7) comprising at least one rotatably supported screw (17) for fixing the furniture fitting (7) to a furniture part (4, 5), the furniture fitting (7) including at least one drive element (21) separate from the screw (17), the drive element (21) being movement-coupled to the screw (17) and having a tool receiving device (22), wherein the at least one screw (17) is configured to be driven by rotating the tool receiving device (22) with the aid of a tool (25), **characterized in that** the furniture fitting (7) includes a housing (9) having a first housing wall (9a) and a second housing wall (9b) spaced from the first housing wall (9a), wherein at least one bearing portion (13) for receiving the screw (17) and for the drive element (21) is arranged between the first housing wall (9a) and the second housing wall (9b), wherein the bearing portion (13) includes at least one first guide (14) for supporting the screw (17) and at least one second guide (15) for supporting the drive element (21).

2. The furniture fitting according to claim 1, **characterized in that** the at least one drive element (21) is rotatably supported about a first rotational axis (A) and the at least one screw (17) is rotatably supported about a second rotational axis (B), wherein the first rotational axis (A) and the second rotational axis (B) are arranged laterally offset from one another.

3. The furniture fitting according to claim 1 or 2, **characterized in that** the drive element (21) and the at least one screw (17) are movement-coupled to each other via co-operating tooth arrangements (18, 19).

4. The furniture fitting according to claim 3, **characterized in that** a first tooth arrangement (18) is formed or arranged on a peripheral surface of the drive element (21).

5. The furniture fitting according to claim 3 or 4, **characterized in that** the screw (17) includes a threaded portion (24a, 24b) and a head portion (20) connected to the threaded portion (24a, 24b), wherein a second tooth arrangement (19) is formed or arranged on the head portion (20) of the screw (17).

6. The furniture fitting according to one of the claims 3 to 5, **characterized in that** the screw (17) has a first abutment surface (23a) and at least one second abutment surface (23b) spaced from each other in an axial direction of the screw (17), wherein a tooth arrangement (18) of the drive element (21) is received between the first and abutment surface (23a, 23b) of the screw (17).

7. The furniture fitting according to one of the claims 1 to 6, **characterized in that** the furniture fitting (7) includes at least two or more screws (17), the two or more screws (17) being configured to be driven by rotating the tool receiving device (22) with the aid of a tool (25).

8. The furniture fitting according to claim 7, **characterized in that** each of a first screw (17) and a second screw (17) of the two or more screws (17) includes a threaded portion (24a, 24b) with a thread arranged thereon, wherein the thread of the first screw (17) and the thread of the second screw (17) have an opposite sense of helix or a same sense of helix.

9. The furniture fitting according to one of the claims 1 to 8, **characterized in that** the bearing portion (13) bears against the first housing wall (9a) as well as against the second housing wall (9b).

10. The furniture fitting according to one of the claims 1 to 9, **characterized in that** the at least one screw (17) and the at least one drive element (21) are pre-fixed by a holding device (16) in a predetermined position relative to the guides (14, 15) of the bearing portion (13), wherein the holding device (16) is configured to be released by applying a force to the drive element (21) with the aid of a tool (25), and the screw (17), after the holding device (16) has been released, is displaceably supported, together with the drive element (21), relative to the guides (14, 15) of the bearing portion (13) in a direction extending transversely, preferably at a right angle, to the housing walls (9a, 9b).

11. The furniture fitting according to claim 10, **characterized in that** the at least one screw (17) and the at least one drive element (21) are movable, starting from the predetermined position, in two directions opposing one another, so that the first housing wall (9a) or, alternatively, the second housing wall (9b) can be fixed to two different furniture parts (4, 5) via the screw (17).

12. The furniture fitting according to one of the claims 2 to 11, **characterized in that** the first rotational axis (A) of the at least one drive element (21) and the second rotational axis (B) of the at least one screw (17) extend substantially parallel to each other.

13. A method for fixing a furniture fitting (7) according to one of the claims 1 to 12 to a furniture part (4, 5), **characterized by** the following steps:
- introducing a tool (25) into the tool receiving device (22) of the drive element (21),
- rotating the drive element (21) by rotating the tool receiving device (22) with the aid of the tool (25),
- driving the at least one screw (17) by the movement-coupling between the drive element (21) and the screw (17), and
- fixing the furniture fitting (7) to the furniture part (4, 5) via the at least one screw (17).

## Revendications

1. Ferrure de meuble (7) avec au moins une vis (17) montée en rotation pour la fixation de la ferrure de meuble (7) sur une partie de meuble (4, 5), dans laquelle la ferrure de meuble (7) présente au moins un élément d'entraînement (21) séparé de la vis (17) et accouplé en mouvement à la vis (17) avec un logement d'outil (22), dans laquelle la au moins une vis (17) peut être entraînée par rotation du logement d'outil (22) au moyen d'un outil (25), **caractérisée en ce que** la ferrure de meuble (7) présente un boîtier (9) avec une première paroi de boîtier (9a) et une deuxième paroi de boîtier (9b) espacée de la première paroi de boîtier (9a), dans laquelle au moins une partie de montage (13) pour la réception de la vis (17) et de l'élément d'entraînement (21) est disposée entre la première et deuxième paroi de boîtier (9a, 9b), dans laquelle la partie de montage (13) présente au moins un premier guidage (14) pour le montage de la vis (17) et au moins un deuxième guidage (15) pour le montage de l'élément d'entraînement (21).

2. Ferrure de meuble selon la revendication 1, **caractérisée en ce que** le au moins un élément d'entraînement (21) est monté de manière à pouvoir tourner autour d'un premier axe de rotation (A) et la au moins une vis (17) autour d'un deuxième axe de rotation (B), dans laquelle le premier axe de rotation (A) et le deuxième axe de rotation (B) sont disposés de manière latéralement décalée l'un de l'autre.

3. Ferrure de meuble selon la revendication 1 ou 2, **caractérisée en ce que** l'élément d'entraînement (21) et la au moins une vis (17) sont accouplés en mouvement l'un à l'autre par l'intermédiaire de dentures (18, 19) en coopération.

4. Ferrure de meuble selon la revendication 3, **caractérisée en ce qu'**une première denture (18) est disposée ou réalisée sur une surface périphérique de l'élément d'entraînement (21).

5. Ferrure de meuble selon la revendication 3 ou 4, **caractérisée en ce que** la vis (17) présente une section filetée (24a, 24b) et une partie tête (20) reliée à la section filetée (24a, 24b), dans laquelle une deuxième denture (19) est disposée ou réalisée sur la partie tête (20) de la vis (17).

6. Ferrure de meuble selon l'une quelconque des revendications 3 à 5, **caractérisée en ce que** la vis (17) présente une première surface de butée (23a) et au moins une deuxième surface de butée (23b), lesquelles sont espacées l'une de l'autre dans une direction axiale de la vis (17) et dans laquelle une denture (18) de l'élément d'entraînement (21) est reçue entre la première et deuxième surface de butée (23a, 23b) de la vis (17).

7. Ferrure de meuble selon l'une quelconque des revendications 1 à 6, **caractérisée en ce que** la ferrure de meuble (7) présente au moins deux vis (17) ou plus, dans laquelle les deux vis (17) ou plus peuvent être entraînées par rotation du logement d'outil (22) au moyen d'un outil (25).

8. Ferrure de meuble selon la revendication 7, **caractérisée en ce qu'**une première vis (17) et une deuxième vis (17) des deux vis (17) ou plus présentent respectivement une section filetée (24a, 24b) avec un filetage disposé sur celle-ci, dans laquelle le filetage de la première vis (17) et le filetage de la deuxième vis (17) présentent un sens de vissage opposé ou un sens de vissage identique.

9. Ferrure de meuble selon l'une quelconque des revendications 1 à 8, **caractérisée en ce que** la partie de montage (13) s'applique aussi bien sur la première paroi de boîtier (9a) que sur la deuxième paroi de boîtier (9b).

10. Ferrure de meuble selon l'une quelconque des revendications 1 à 9, **caractérisée en ce que** la au moins une vis (17) et le au moins un élément d'entraînement (21) sont préfixés au niveau d'une position prédéfinie par rapport aux guidages (14, 15) de la partie de montage (13) par un dispositif de retenue (16), dans laquelle le dispositif de retenue (16) peut être libéré par exercice d'une force sur l'élément d'entraînement (21) au moyen de l'outil (25) et la vis (17) une fois la libération du dispositif de retenue (16) effectuée est montée de manière à pouvoir se déplacer conjointement avec l'élément d'entraînement (21) par rapport aux guidages (14, 15) de la partie de montage (13) dans une direction s'étendant transversalement, de préférence s'étendant perpendiculairement, par rapport aux parois de boîtier (9a, 9b).

11. Ferrure de meuble selon la revendication 10, **caractérisée en ce que** la au moins une vis (17) et le au moins un élément d'entraînement (21) sont mobiles à partir de la position prédéfinie dans deux directions opposées, de sorte que la première paroi de boîtier (9a) ou en variante la deuxième paroi de boîtier (9b) peut être fixée par l'intermédiaire de la vis (17) sur deux parties de meuble (4, 5) différentes.

12. Ferrure de meuble selon l'une quelconque des revendications 2 à 11, **caractérisée en ce que** le premier axe de rotation (A) du au moins un élément d'entraînement (21) et le deuxième axe de rotation (B) de la au moins une vis (17) s'étendent sensiblement parallèlement l'un à l'autre.

13. Procédé pour la fixation d'une ferrure de meuble (7) selon l'une quelconque des revendications 1 à 12 sur une partie de meuble (4, 5), **caractérisé par** les étapes suivantes :
- un outil (25) est introduit dans le logement d'outil (22) de l'élément d'entraînement (21),
- l'élément d'entraînement (21) est amené en rotation par rotation du logement d'outil (22) au moyen de l'outil (25),
- la au moins une vis (17) est entraînée par l'accouplement en mouvement entre l'élément d'entraînement (21) et la vis (17), et
- la ferrure de meuble (7) est fixée sur la partie de meuble (4, 5) par l'intermédiaire de la au moins une vis (17).
